# EUROPEAN PATENT APPLICATION

(11) **EP 0 602 273 A1**
(43) Date of publication of application: **22.06.1994**
(21) Application number: 92121573.7
(22) Date of filing: 18.12.1992
(51) Int. Cl.: B62J 11/02

(54) **Universal attachment for bicycle pumps**

(71) Applicant: Barbieri, Adriano, I-40131 Bologna (IT)
(72) Inventor: Barbieri, Adriano, I-40131 Bologna (IT)
(74) Representative: Modiano, Guido, Dr.-Ing.

(57) **Abstract**

Universal attachment for bicycle pumps, comprising a handle (11) articulated in a median position (10) at the end (9) of the piston (8) of the pump (1), said handle (11) arranging itself substantially in the shape of a T during pumping and having, on one side (12), a substantially semicircular cross-section which is internally provided with a plurality of closely spaced raised ribs (13), which are adapted to engage, in a snap-together manner, at least one corresponding rib (18) of the end (7) of the pump cylinder (2) in order to vary the length of said pump, the other part of the handle and the bottom of the cylinder having two shaped tips (15,16) fixed thereto, said tips being made of a material such as rubber and being adapted to rest, by forcing, against frame tubes when the handle (11) is aligned.

## Description

The present invention relates to a universal attachment for bicycle pumps.

Metallic posts, which are fixed to the vertical seat tube of the bicycle and are inserted in corresponding axial holes of the handle and of the bottom of the pump are known for fixing bicycle pumps to bicycles: other attachments provide for terminal posts of the pump and of the handle and for impressions of tubes of the bicycle frame against which the posts are pressed by an extension spring arranged between the pump and the handle: the pumps have variable lengths and bicycle frames differ from one to another, and due to this fact, once the posts have been fixed, or in the presence of a certain frame, it is necessary to mount a specific pump type having a specific length.

Other types of attachment are rather unaesthetic or can mark or scratch the frame of the bicycle: therefore, if a user has more than one bicycle, he needs to have a different pump for each bicycle he owns.

Moreover, it has been observed that the shape of the handle and the coupling to the tire valve do not allow for a good pumping action.

The technical aim of the present invention is to obviate the above problems, i.e. to provide a universal attachment for bicycle pumps which allows to install the pump on any type of bicycle and does not damage the frame of said bicycle.

Another object of the present invention is to provide a handle and a coupling to the pumping valve which allows for an effective pumping action.

Another object of the present invention is to achieve the above aim with a simple structure which is relatively easy to assemble, safe in use and effective in operation as well as relatively modest in cost.

This aim and these objects are all achieved by the present universal attachment for bicycle pumps, characterized in that a handle is articulated in a median position at the end of the piston of the pump, said handle arranging itself substantially in the shape of a T during pumping and having, on one side, a substantially semicircular cross-section which is internally provided with a plurality of closely spaced raised ribs which can engage, in a snap-together manner, at least one corresponding rib of the end of the pump cylinder in order to vary the length of said pump, the other part of the handle and the bottom of the cylinder having two shaped tips fixed thereto, said tips being made of a material such as rubber and being adapted to rest, by forcing, against frame tubes when the handle is aligned.

Further characteristics and advantages will become apparent and evident from the detailed description of a preferred but not exclusive embodiment of a universal attachment for bicycle pump according to the invention, illustrated only by way of non-limitative example in the accompanying drawings, wherein:

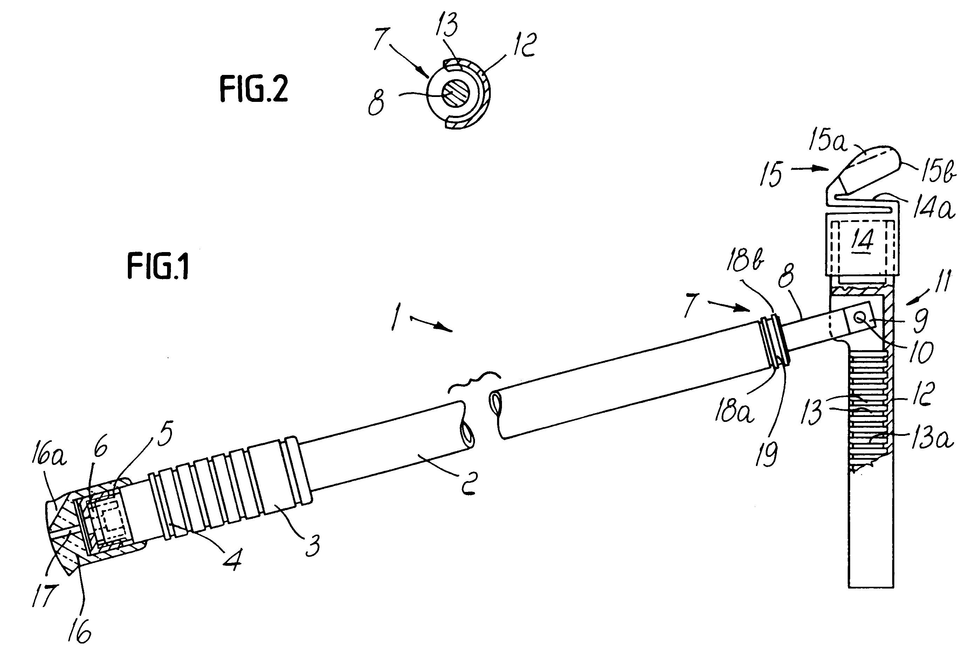

figure 1 is a partially cutout side view of a bicycle pump equipped with a universal attachment, according to the invention;
figure 2 is a front view of a detail of the attachment of figure 1.

With particular reference to the above figures, the reference numeral 1 generally designates a bicycle pump provided with a universal attachment according to the invention.

The pump 1 comprises a cylinder 2 which has an enlarged end 3, which has annular grooves 4 on its outside and has, in a downward position, a terminal 5 with an axial air output hole in which a pad 6, made of a material such as rubber, is arranged; said pad is suitable to pressed, so as to form a seal, against the valve of the wheel to be inflated; at the other end, the cylinder has another pad 7 which is screwed on it and is axially perforated for the passage and guiding of the piston 8.

The piston 8 of the pump has a terminal 9, made of a material such as plastic, fixed to its end; said terminal is diametrically crossed by a hole for a pin 10 for articulation to a handle 11 in a median position.

On one side 12, the handle 11 has a substantially semicircular cross-section, extending over slightly more than 180 degrees, and is internally provided with a plurality of equidistant raised ribs 13 between which grooves 13a are defined: on the other side, the handle is cylindrical and hollow for the placement of patches, glue or the like, and a cap 14 can be forced thereon; an elastic wing 14a, provided with a shaped tip 15, is rigidly coupled to said cap; another tip 16 can be forced onto the pad 6.

The tips 15 and 16 are made of a material such as rubber, and their surfaces located externally with respect to the terminals bear the impressions 15a, 15b, 16a of the tubes of the bicycle frame against which they are meant to be pressed.

The tip 16 has a hole 17 to allow the escape of air when said tip is fitted on the bottom of the pump.

Two raised ribs 18a, 18b are provided on the outer surface of the pad 7; a groove 19 is defined between them, and one of the ribs 13 of the part 12 of the handle is adapted to arrange itself inside said groove in a snap-together manner, whereas at the same time the ribs 18a, 18b enter, in a snap-together manner, corresponding contiguous grooves 13a of the handle; only one rib 18, or more than two, might also be provided.

In order to fix the pump to the frame it is sufficient to place the tip 16 and the tip 15, whilst the handle is in the folded condition, against corresponding fixed tubes of the bicycle frame and then, by pushing gently, align the handle with the pump; the grooves and ribs 18, 19, 13, 13a mutually engage in a snap-together manner, regardless of the distance between the tubes against which the tips must be pressed: upon the alignment of the handle, the tips, are slightly forced against the tubes of the frame and the pump is firmly retained on the bicycle frame: the impressions which the tips bear, facilitate coupling.

It has thus been observed that the attachment according to the invention achieves the intended aim and objects, and in particular that it allows to fix the pump to any kind of bicycle, regardless of the distance between two fixed points thereof constituted by tubular elements of the frame: furthermore, the T-shaped handle and the coupling to the valve of the tire along the axis of the pump allow to apply a good pumping action.

The attachment thus conceived is susceptible to numerous modifications and variations, all of which are within the scope of the inventive concept: thus, for example, the hole 17 may be transverse instead of axial.

All the details may furthermore be replaced with other technically equivalent ones.

In practice, the materials employed, as well as the shapes and dimensions, may be any according to the requirements without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Universal attachment for bicycle pumps, characterized in that a handle (11) is articulated in a median position (10) at the end (9) of the piston (8) of the pump (1), said handle (11) arranging itself substantially in the shape of a T during pumping and having, on one side (12), a substantially semicircular cross-section which is internally provided with a plurality of closely spaced raised ribs (13), which are adapted to engage, in a snap-together manner, at least one corresponding rib (18) of the end (7) of the pump cylinder (2) in order to vary the length of said pump, the other part of the handle and the bottom of the cylinder having two shaped tips (15,16) fixed thereto, said tips being made of a material such as rubber and being adapted to rest, by forcing, against frame tubes when the handle (11) is aligned.

2. Attachment according to claim 1, characterized in that a perforated pad (6), comprising a hole (17), made of a material such as rubber, is fitted in the bottom of the cylinder (2) for the sealed coupling of the tire inflation valve.

3. Attachment according to claim 2, characterized in that said hole (17) is axial with respect to the pump (1).

4. Attachment according to claim 1, characterized in that said shaped tips (15,16) bear the impression of the frame tubes against which they are adapted to be pressed.

5. Attachment according to claim 1, characterized in that said closely spaced raised ribs (13) are mutually equidistant.

6. Attachment according to claim 1, characterized in that there are two of said ribs (18) of the end (7) of the pump cylinder (2).

7. Attachment according to claim 1, characterized in that the handle (11) extends with a substantially semicircular cross-section (12) over slightly more than one hundred and eighty degrees.

8. Attachment according to claim 1, characterized in that one of said shaped tips (15) is rigidly coupled to the end of an elastic wing (14a) which extends from the base of a cap (14) which can be forced on the other part of the handle (11).

9. Attachment according to claim 1, characterized in that the other part of the handle (11) is hollow to accommodate patches, glue or the like.
